(19)

Europäisches
Patentamt
European
Patent Office
Office européen
des brevets

(11) **EP 3 560 903 A1**

(12) **EUROPEAN PATENT APPLICATION**

(43) Date of publication:
**30.10.2019 Bulletin 2019/44**

(21) Application number: **19171164.7**

(22) Date of filing: **25.04.2019**

(51) Int Cl.:
**C04B 28/02** (2006.01)          **C04B 40/00** (2006.01)
**C04B 103/30** (2006.01)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **25.04.2018 JP 2018083876
20.03.2019 JP 2019053248**

(71) Applicant: **Shin-Etsu Chemical Co., Ltd.
Tokyo (JP)**

(72) Inventor: **YAMAKAWA, Tsutomu
Joetsu-shi,, Niigata (JP)**

(74) Representative: **Mewburn Ellis LLP
City Tower
40 Basinghall Street
London EC2V 5DE (GB)**

(54) **PREPARATION OF WATER-REDUCING COMPOSITION, WATER-REDUCING COMPOSITION AND HYDRAULIC COMPOSITION**

(57)     A water-reducing composition is obtained by a method for preparing the water-reducing composition, the method including stirring a water-reducing agent, a water-soluble cellulose ether, a gum and a defoamer by a high speed stirrer, in which the water-reducing agent has a solid component concentration of 10 to 25% by weight and an $Na^+$ ion concentration of 8,500 ppm or higher, and in which a stirring element in the high speed stirrer has a peripheral speed of 8.50 m/s or higher, and the water-reducing composition has a sedimentation volume of 80% by volume or higher after being left standing for 72 hours from immediately after preparing the water-reducing composition, or being dispersion.

EP 3 560 903 A1

**Description**

TECHNICAL FIELD

The present invention relates to a method for preparing a water-reducing composition, a water-reducing composition and a hydraulic composition.

BACKGROUND

A hydraulic composition is a composition containing at least a hydraulic substance such as cement, aggregate such as fine aggregate and/or coarse aggregate, and water. Since it is a collection of inorganic materials having different specific gravity, particle shape and particle size, it is liable to material separation and improvements have been attempted by using a water-soluble polymer. For example, water-soluble cellulose ethers are a few nonionic water-soluble polymers that can increase the viscosity even in hydraulic compositions having a strong alkaline pH of 12 or more, and are used in hydraulic compositions.

However, there have been problems in that since a water-soluble cellulose ether is generally used in powder form, it is awkward to handle as compared with other admixtures which are liquid. The water-soluble cellulose ether tends to form lumps when added, and when a minor amount of the water-soluble cellulose ether is added, scattering makes it difficult to add a desired amount.

In order to solve these problems, a water-reducing composition (also referred to a one-pack type water-reducing agent) obtained by preliminarily combining a water-soluble cellulose ether with a defoamer, a gum and a water-reducing agent has been proposed (JP-A 2016-056081 and EP-A-2966049 (Patent Document 1)).

In Patent Document 1, an attempt has been made to improve the storage stability of the water-reducing composition by using a gum. However, in the case of a water-reducing agent having a high solid component concentration and a high $Na^+$ ion concentration, the storage stability of the water-reducing composition may be inferior and there is room for improvement. As is well known, a water-reducing agent is typically in the form of a solution of organic water-reducing compound. If it were possible to blend a water-reducing agent having a high solids concentration and a high $Na^+$ ion concentration in a water-reducing composition, it would not be necessary so to dilute the water-reducing agent on use to stabilize the water-reducing composition. The amount of water-reducing composition to be added to the hydraulic composition could then be small, constraints on the type of the water-reducing agent and the solid component concentration and the like could be reduced, and there is an advantage that the range of use of the water-reducing agent usable as a water-reducing composition also expands.

Citation List

Patent Document 1: JP-A 2016-056081 (EP-A-2966049)

THE INVENTION

The present invention has been made in consideration of such a situation, and an object of the present invention is to provide a method for preparing a water-reducing composition containing a water-reducing agent having a high solids concentration and a high $Na^+$ ion concentration, a water-soluble cellulose ether, a gum, and a defoamer, the method being capable of achieving or improving storage stability of the water-reducing composition. Related aspects are a water-reducing composition, especially an admixture composition, a hydraulic composition containing the water-reducing composition, and use of the water-reducing composition as an admixture when preparing a hydraulic composition.

If the solid component concentration and the $Na^+$ ion concentration of the water-reducing agent exceed a certain limit of concentration in the water-reducing composition, the water-soluble cellulose ether becomes no longer dissolvable, a phenomenon of precipitation (salting out) occurs, and the water-soluble cellulose ether settles out without being stabilized or achieving stability. In Patent Document 1, a gum is added to suppress precipitation of salted out water-soluble cellulose ether particles by increasing the viscosity of the water-reducing composition. However, there is a limit to the above. If the solid component concentration in the water-reducing agent is 10% by weight or higher and the $Na^+$ ion concentration is 8,500 ppm or higher, we find that the water-soluble cellulose ether component precipitates and storage stability of the water-reducing composition gets worse.

In order to solve this problem, the present inventor conducted diligent studies on the production conditions of a water-reducing composition. As a result, in the case of preparing a water-reducing composition by stirring a water-reducing agent having a high solid component concentration and a high $Na^+$ ion concentration, a water-soluble cellulose ether, a gum and a defoamer, it has been unexpectedly found that by setting the rotation speed or tip speed of a stirring element of a high speed stirrer or mixer to a certain speed or higher, the storage stability of the water-reducing composition is improved. To explain: usually, in order to prevent settling of water-soluble cellulose ether, a water reducing agent composition containing a water reducing agent is produced by dispersing water-soluble cellulose ether (having a hydrophilic group and a lipophilic group) by dispersing the high-speed stirrer at a certain speed or higher. Thereby, the water-soluble cellulose ether is well dispersed and stabilized in the water-reducing composition. Therefore, with respect to the salting out of water-soluble cellulose ether, even if the rotation speed of the stirrer is increased, it seems not to become easy and stable to make the components one-pack type (uniform dispersion) while avoiding salting out. However, as a result of experiments, it has been found that not only the stability of one-pack composing (uniform dispersion) increases but also the one-pack state (uniform dispersion state) is stabilized over a long period of time by setting the peripheral speed of the high-speed stirrer (rotator) to a constant peripheral speed or more stabilizes for a long time.

Based on this finding, the present inventor has conducted further diligent studies and have made the present invention.

In one aspect, the invention provides a method for preparing a water-reducing composition comprising a step of stirring a water-reducing agent, a water-soluble cellulose ether, a gum and a defoamer by a high speed stirrer, wherein the water-reducing agent has a solid component concentration of 10 to 25% by weight, and an $Na^+$ ion concentration of 8,500 ppm or higher, and a stirring element in the high speed stirrer has a peripheral speed of 8.50 m/s or higher.

Preferably, the water-reducing agent is a polycarboxylic acid base water-reducing agent.

Preferably, the high speed stirrer is a rotor-stator type mixer. It may be a cylindrical wall turning mixer.

In another aspect, the invention provides a water-reducing composition comprising a water-reducing agent, a water-soluble cellulose ether, a gum and a defoamer, wherein the water-reducing agent has a solid component concentration of 10 to 25% by weight and an $Na^+$ ion concentration of 8,500 ppm or higher, and the water-reducing composition has a sedimentation volume after being left standing for 72 hours from immediately after preparing the water-reducing composition of 80% by volume or higher. Alternatively the water-reducing composition can be defined as being obtainable by the method disclosed herein and having the mentioned sedimentation volume characteristics.

In further aspects the invention provides a hydraulic composition including the water-reducing composition defined above, a hydraulic substance and water, and a method of preparing a hydraulic composition comprising the use of the use of the water-reducing composition as an admixture.

## ADVANTAGEOUS EFFECTS

According to the present invention, even with a water-reducing composition using a water-reducing agent having a predetermined solid component concentration and ion concentration, the storage stability is improved and effects of bleeding suppression and effects of preventing material separation such as aggregates when used in a hydraulic composition are expected.

## FURTHER EXPLANATIONS: OPTIONS AND PREFERENCES

The method for preparing the water-reducing composition, the water-reducing composition and the hydraulic composition according to the present invention are described below. Note that numerical ranges "A to B" herein include the numerical values at both ends, meaning A or more and B or less.

## Method for Preparing Water-Reducing Composition

The method for preparing the water-reducing composition according to the present invention is characterized by comprising a step of stirring a water-reducing agent, a water-soluble cellulose ether, a gum and a defoamer using a high speed stirrer or mixer, in which the water-reducing agent has a solid component concentration of 10 to 25% by weight and an $Na^+$ ion concentration measured by ion chromatography of 8,500 ppm or higher, and a stirring element in the high speed stirrer has a peripheral speed of 8.50 m/s or higher.

Notably, a water-reducing composition means a mixture for a hydraulic composition, containing at least a water-reducing agent, a water-soluble cellulose ether, a gum and a defoamer, (also referred to a one-pack or one-part type water-reducing agent or composition) in which the mentioned components are mixed together as a composition for addition as an admixture when preparing a hydraulic composition.

## Water-reducing agent

Here, examples of the water-reducing agent include a polycarboxylic acid base water-reducing agent, a lignin base water-reducing agent, a melamine base water-reducing agent and the like. These are all well-known types.

Among them, specific examples of the polycarboxylic acid base water-reducing agent include a polycarboxylic acid ether base compound, a complex of a polycarboxylic acid ether base compound and a crosslinked polymer, a complex of a polycarboxylic acid ether base compound and an orientated polymer, a complex of a polycarboxylic acid ether base compound and a highly modified polymer, a polyether carboxylic acid base high-molecular compound, a maleic acid copolymer, a maleic acid ester copolymer, a maleic acid derivative copolymer, a carboxyl group-containing polyether base compound, a polycarboxylic acid group-containing poly-copolymer having a terminal sulfone group, a polycarboxylic acid base graft copolymer, a polycarboxylic acid ether base polymer and the like.

Specific examples of the lignin base water-reducing agent include a ligninsulfonic acid salt and its derivative and the like.

Specific examples of the melamine base water-reducing agent include a melamine sulfonic acid-formaldehyde condensate, a melamine-sulfonic acid salt condensate, a melamine-sulfonic acid salt polyol condensate and the like.

Among them, from the viewpoint of versatility, it is preferable to use a polycarboxylic acid base water-reducing agent.

The water-reducing agent may be used singly or in combination of two or more depending on the purpose, and commercially available water-reducing agents may be used.

The solid component concentration of the water-reducing agent is preferably 10 to 25% by weight, more preferably 12 to 22.5% by weight, and more preferably 13 to 20% by weight. If the solid component concentration is less than 10% by weight, it might be that in some cases the water-reducing composition would show adequate or good storage stability without depending on the present method. On the other hand, if the solid component concentration exceeds 25% by weight, one-pack formulation (uniformly-mixed dispersion) may be difficult.

For present purposes the solid component concentration of the water-reducing agent can be defined and measured as follows.

First, about 5 g of the water-reducing agent is placed in a 16 ml weighing bottle, and its weight, that is, the weight (g) of the water-reducing agent before drying is measured. Then, the content is dried to a constant weight with a dryer at 105°C and the weight (g) of the water-reducing agent after drying is measured.

Using the measured weights of the water-reducing agent before and after drying, the solid component concentration can be calculated by the following calculation formula.

$$\text{Solid component concentration (\% by weight)} =$$
$$(\text{weight (g) of water-reducing agent after drying} /$$
$$\text{weight (g) of water-reducing agent before drying}) \times 100$$

Further, the $Na^+$ ion concentration of the water-reducing agent is 8,500 ppm or higher, preferably 9,000 to 14,000 ppm, more preferably 9,000 to 13,000 ppm, and still more preferably 9,000 to 12,000 ppm. If the $Na^+$ ion concentration is less than 8,500 ppm, there may be a case where the water-reducing composition may show good storage stability without depending on the present invention.

The $Na^+$ ion concentration of the water-reducing agent is as measured by ion chromatography. Details are described in the Examples.

In the water-reducing composition, the amount of the water-reducing agent is a reference amount (for example, 100 parts by weight), and a water-soluble cellulose ether, a gum and a defoamer are added at a predetermined ratio per the water-reducing agent. Meanwhile, when a hydraulic composition is prepared, the water-reducing composition is used such that the amount of the water-reducing agent to be added is preferably 0.1 to 3.0% by weight, and more preferably 0.5 to 2.0% by weight per unit cement content ($kg/m^3$), from the viewpoint of fluidity of concrete, resistance to material separation, setting retardation and the like.

Water-soluble cellulose ether

The water-soluble cellulose ether is preferably nonionic, and examples thereof include alkyl cellulose such as methyl cellulose; hydroxyalkyl cellulose such as hydroxyethyl cellulose and hydroxypropyl cellulose; hydroxyalkyl alkyl cellulose such as hydroxypropyl methyl cellulose, hydroxyethyl methyl cellulose and hydroxyethyl ethyl cellulose. The water-soluble cellulose ether may be used singly or in combination of two or more depending on the purpose. In addition, as the water-soluble cellulose ether, commercially available ones may be used, or those produced by known methods may be used.

Among the above alkyl celluloses, the degree of substitution (DS) of methoxy group in methyl cellulose is preferably 1.00 to 2.20, and more preferably 1.20 to 2.00. The degree of substitution (DS) of alkoxy group in alkyl cellulose can be obtained by converting the value that can be measured by the analysis method of the degree of substitution of methyl cellulose prescribed in the Japanese Pharmacopoeia, 17th Edition.

Among the above hydroxyalkyl celluloses, the molar substitution (MS) of hydroxyethoxy group in hydroxyethyl cellulose is preferably 0.30 to 3.00, and more preferably 0.50 to 2.80, and in hydroxypropyl cellulose, the molar substitution (MS) of hydroxypropoxy group is preferably 0.10 to 3.30, and more preferably 0.30 to 3.00. The molar substitution of hydroxyalkoxy group in hydroxyalkyl cellulose can be obtained by converting the value that can be measured by the analysis method of the degree of substitution of hydroxypropyl cellulose prescribed in the Japanese Pharmacopoeia, 17th Edition.

Among the above hydroxyalkyl alkyl celluloses, the degree of substitution (DS) of methoxy group in hydroxypropyl methyl cellulose is preferably 1.00 to 2.20, and more preferably 1.30 to 1.90, and the molar substitution (MS) of hydroxypropoxy group is preferably 0.10 to 0.60, and more preferably 0.10 to 0.50. In hydroxyethyl methyl celluloses, the degree of substitution (DS) of methoxy group is preferably 1.00 to 2.20, and more preferably 1.30 to 1.90, and the molar substitution (MS) of hydroxyethoxy group is preferably 0.10 to 0.60, and more preferably 0.20 to 0.40. In hydroxyethyl ethyl celluloses, the degree of substitution (DS) of methoxy group is preferably 1.00 to 2.20, and more preferably 1.20 to 2.00, and the molar substitution (MS) of hydroxyethoxy group is preferably 0.05 to 0.60, and more preferably 0.10 to 0.50. The degree of substitution of alkoxy group and the molar substitution of hydroxyalkoxy group in hydroxyalkyl alkyl cellulose can be obtained by converting the value that can be measured by the analysis method of the degree of substitution of hypromellose (hydroxypropyl methyl cellulose) prescribed in the Japanese Pharmacopoeia, 17th Edition.

DS refers to the degree of substitution representing the number of alkoxy groups per glucose ring unit of cellulose and MS refers to molar substitution representing an average molar amount of hydroxyalkoxy groups added per glucose ring unit of cellulose.

From the viewpoint of imparting resistance to material separation, as the water-soluble cellulose ether, among the ones listed above, a hydroxyalkyl alkyl cellulose such as hydroxypropyl methyl cellulose and hydroxyethyl methyl cellulose is preferable.

The water-soluble cellulose ether(s) is preferably one for which viscosity of a 1% by weight aqueous solution of the water-soluble cellulose ether at 20°C is 30 to 30,000 mPa·s, more preferably 300 to 25,000 mPa·s, still more preferably 500 to 20,000 mPa·s, and particularly preferably 500 to 3,000 mPa·s from the viewpoint of imparting a predetermined viscosity to the hydraulic composition.

The viscosity of a 1% by weight aqueous solution of a water-soluble cellulose ether at 20°C can be measured under a measuring condition of 12 rpm using a B type viscometer.

From the viewpoint of imparting a predetermined viscosity to the hydraulic composition, the amount of the water-soluble cellulose ether added is preferably 0.1 to 5.0% by weight (parts by weight), and more preferably 0.5 to 3.0% by weight (parts by weight) per 100% by weight (100 parts by weight) of the water-reducing agent.

Gum

Examples of the gum include diutan gum, welan gum, xanthan gum, gellan gum and the like.

Among them, diutan gum is composed of D-glucose, D-glucuronic acid, D-glucose and L-rhamnose and two L-rhamnose.

Welan gum has a structure containing a backbone of D-glucose, D-glucuronic acid and L-rhamnose bonded at a ratio of 2:2:1 to which a side chain of L-rhamnose or L-mannose is bonded.

Xanthan gum has a backbone of β-1,4-bonded D-glucose like cellulose, and a side chain composed of two mannose and one glucuronic acid.

Gellan gum is a hetero-polysaccharide composed of repeat units of four sugars, that is, D-glucose, D-glucuronic acid and L-rhamnose are bonded at a ratio of 2:1:1.

The gum may be added either as powder or as aqueous solution.

The gum may be used singly or in combination of two or more depending on the purpose. In addition, commercially available gums may be used.

The amount of the gum added is, in the case of diutan gum, preferably 0.005 to 2% by weight (parts by weight), more preferably 0.01 to 1% by weight (parts by weight), and still more preferably 0.1 to 0.8% by weight (parts by weight) per 100% by weight (100 parts by weight) of the water-reducing agent.

The amount of the gum added is, in the case of welan gum, xanthan gum, or gellan gum, preferably 0.01 to 20% by weight (parts by weight), more preferably 0.1 to 10% by weight (parts by weight), and still more preferably 0.5 to 8% by weight (parts by weight) per 100% by weight (100 parts by weight) of the water-reducing agent.

Defoamer

Examples of the defoamer include oxyalkylene base defoamer, silicone base defoamer, alcohol base defoamer, mineral oil base defoamer, fatty acid base defoamer, and fatty acid ester base defoamer and the like.

Among them, specific examples of the oxyalkylene base defoamer include polyoxyalkylenes such as (poly)oxyethylene-(poly)oxypropylene adducts; (poly)oxyalkylene alkyl ethers such as diethylene glycol heptyl ether, polyoxyethylene oleyl ether, polyoxypropylene butyl ether, polyoxyethylene polyoxypropylene 2-ethylhexyl ether, and oxyethylene oxypropylene adducts to higher alcohols of 8 or more carbon atoms or secondary alcohols of 12 to 14 carbon atoms; (poly)oxyalkylene (alkyl) aryl ethers such as polyoxypropylene phenyl ether and polyoxyethylene nonyl phenyl ether; acetylene ethers obtained from addition polymerization of alkylene oxides to acetylene alcohols such as 2,4,7,9-tetramethyl-5-decyne-4,7-diol, 2,5-dimethyl-3-hexyne-2,5-diol, and 3-methyl-1-butyn-3-ol; (poly)oxyalkylene fatty acid esters such as diethylene glycol oleic acid ester, diethylene glycol lauric acid ester, ethylene glycol distearic acid ester and polyoxyalkylene oleic acid ester; (poly)oxyalkylene sorbitan fatty acid esters such as polyoxyethylene sorbitan monolauric acid ester and polyoxyethylene sorbitan trioleic acid ester; (poly)oxyalkylene alkyl (aryl) ether sulfuric acid ester salts such as polyoxypropylene methyl ether sodium sulfate and polyoxyethylene dodecyl phenol ether sodium sulfate; (poly)oxyalkylene alkyl phosphoric acid esters such as (poly)oxyethylene stearyl phosphoric acid ester; (poly)oxyalkylene alkyl amines such as polyoxyethylene lauryl amine; and polyoxyalkylene amides and the like.

Specific examples of the silicone base defoamer include dimethylsilicone oil, silicone paste, silicone emulsion, organic modified polysiloxane (polyorganosiloxane such as dimethylpolysiloxane), fluoro-silicone oil and the like.

Specific examples of the alcohol base defoamer include octyl alcohol, 2-ethylhexyl alcohol, hexadecyl alcohol, acetylene alcohol, glycols and the like.

Specific examples of the mineral oil base defoamer include kerosene, liquid paraffin and the like.

Specific examples of the fatty acid base defoamer include oleic acid, stearic acid, alkylene oxide adducts thereof and the like.

Specific examples of the fatty acid ester base defoamer include glycerol monoricinolate, alkenyl succinic acid derivatives, sorbitol monolaurate, sorbitol trioleate, natural wax and the like.

Among them, oxyalkylene base defoamers are preferable from the viewpoint of defoaming performance.

The amount of defoamer added is preferably 0.001 to 16% by weight (parts by weight), and more preferably 0.002 to 10% by weight (parts by weight) per 100% by weight (100 parts by weight) of the water-reducing agent.

The defoamer may be used singly or in combination of two or more depending on the purpose. Commercially available defoamers may be used.

The above-described water-reducing agent, the water-soluble cellulose ether, the gum and the defoamer are stirred with a high speed mixer; there is no particular limitation on the order of adding the materials at the time of stirring.

High speed stirrer

The high speed stirrer used in the present invention is a device having a stirring element that rotates at high speed (rotation blade) and a container capable of mixing the above-described materials by rotation of the stirring element. High-shear mixers are well known. Examples include rotor-stator type mixers such as a Homo Mixer (HM-310, manufactured by AS ONE Corporation), and a High Speed Homo Mixer (LZB14-HM-1, manufactured by CHUORIKA CO., LTD.), a cylindrical wall slewing or shearing mixer such as a thin film rotation type high speed mixer (FILMIX, manufactured by PRIMIX Corporation), a homogenizer (PH91, manufactured by SMT Corporation) and the like as well as other high speed stirrers in which these principles are applied. Among them, a rotor-stator type mixer or a cylindrical wall slewing mixer are preferable. As is well-known, high-speed or high-shear mixers typically provide high-speed rotation of a stirring element, which may be a disk impeller with blades or more usually a rotor element e.g. a sleeve, cage, plate or cylinder having an array of openings such as slots or perforations for through-flow of material, whose surface is rotated adjacent the surface of another (usually fixed) element which may also have such openings.

Examples of the type of the stirring element (rotation blade) in the high speed stirrer include those of a turbine-stator type, a thin film slewing or rotation type (PC wheel: a perforated cylindrical element rotated in close proximity to a cylindrical vessel wall), a disper type and a perforated cage type and the like. From the viewpoints of stirring efficiency and storage stability of the water-reducing composition, those of a turbine-stator type and a thin film slewing type (PC wheel) are preferable.

The peripheral speed of the stirring element in the high speed stirrer is 8.50 m/s or higher, preferably 9.00 to 30.0 m/s, and more preferably 9.00 to 25.0 m/s. If the peripheral speed is lower than 8.50 m/s, the storage stability of the water-reducing composition tends not to be improved. Meanwhile, the peripheral speed of the stirring element is the speed of the fastest part (that is, the outermost circumference of the stirring element) of the stirring element (rotation blade) that rotates in the high speed stirrer. The peripheral speed $v$ (m/s) of the stirring element is obtained from the diameter $d$ (mm) of the stirring element and the rotation speed $n$ (rpm (the rotation number per minute) of the stirring element) by the following formula.

$$v = \pi \times d \times n/60,000$$

In addition, the size (diameter) of the stirring element (rotation blade) is preferably 10 to 500 mm from the viewpoint of manufacturing and processing of the high speed stirrer.

The rotation speed of the stirring element (rotation blade) in the high speed stirrer is preferably 325 rpm or higher, preferably 1,200 to 50,000 rpm, and more preferably 3,500 to 20,000 rpm from the viewpoint of dispersibility.

The stirring time in the high speed stirrer is the time after reaching the target peripheral speed of the stirring element, and is preferably 30 seconds or longer, and more preferably 1 minute or longer. Further, the upper limit of the stirring time is not particularly limited, but is preferably 60 minutes or shorter, and more preferably 10 minutes or shorter, from the viewpoint of efficient productivity.

Water-Reducing Composition

The water-reducing composition according to the present invention is obtained/obtainable by the above-described method for preparing the water-reducing composition. The water-reducing composition, which is a one-pack type composition, comprises at least the water-reducing agent, water-soluble cellulose ether, gum and defoamer, and preferably consists of the water-reducing agent, water-soluble cellulose ether, gum and defoamer. The solid component concentration of the water-reducing agent used is 10 to 25% by weight, and the $Na^+$ ion concentration of the water-reducing agent used, as measured by ion chromatography, is 8,500 ppm or higher. Desirably the water-reducing composition has a sedimentation volume, after being left standing for 72 hours from immediately after preparing the water-reducing composition (one-pack formulation by stirring), of 80% by volume or higher.

In addition, according to the present invention, it is also possible and desirable that the sedimentation volume of the water-reducing composition after 168 hours from immediately after preparing the water-reducing composition (one-pack composing by stirring) is 70% by volume or higher.

If the first-mentioned sedimentation volume of the water-reducing composition is less than 80% by volume, even when a predetermined amount of the water-reducing composition is added to a hydraulic composition, the necessary amount of the water-soluble cellulose ether may not be added due to the separation of the water-soluble cellulose ether, which may result in material separation.

Here, "sedimentation volume" means a volume ratio (suspension maintenance ratio) of the suspended layer (water-reducing composition layer) to the whole liquid that is observed when a predetermined amount (for example, 100 ml) of the water-reducing composition immediately after stirring is poured into a plugged measuring cylinder having a predetermined outer diameter (for example, 32 mm), and is left to stand at room temperature (20 $\pm$ 3°C) for a certain period of time. The amount of the water-reducing composition immediately after stirring and the size (outer diameter and height) of the measuring cylinder to be used are not particularly limited as long as the height of the suspended layer (water-reducing composition layer) in the whole liquid (that is, the boundary position between the supernatant and the suspended layer in the whole liquid) at the time of the observation can be clearly confirmed visually.

Hydraulic Composition

The hydraulic composition according to the present invention is characterized by containing at least the above-described water-reducing composition according to the present invention, a hydraulic substance and water.

Specific uses of the hydraulic composition include concrete, mortar, cement paste, and the like.

The hydraulic composition for concrete contains the water-reducing composition according to the present invention, a hydraulic substance (cement), water, a fine aggregate (sand) and a coarse aggregate (gravel). Examples of the type of the hydraulic composition include plain concrete, medium fluidity concrete, high fluidity concrete, anti-washout underwater concrete, sprayed concrete and the like.

The hydraulic composition for mortar contains the water-reducing composition according to the present invention, a hydraulic substance (cement), water and a fine aggregate (sand). Examples of the type thereof include a mortar for tiling, a repair mortar, self-leveling material and the like.

The hydraulic composition for cement paste contains the water-reducing composition according to the present invention, a hydraulic substance (cement) and water. Examples thereof include an adhesive for tile-based inorganic building materials, a grout material that fills the empty wall between one member and another member and the like.

The content of the water-reducing composition according to the present invention in the hydraulic composition is desirably as follows from the viewpoint of imparting resistance to material separation. When the hydraulic composition is used for concrete, the content is preferably 0.10 to 2.0% by weight, and more preferably 0.5 to 1.5% by weight. When the hydraulic composition is used for mortar, the content is preferably 0.05 to 1.5% by weight, and more preferably 0.10 to 1.0% by weight. When the hydraulic composition is used for cement paste, the content is preferably 0.02 to 1.0% by weight, and more preferably 0.05 to 0.8% by weight.

Examples of the hydraulic substance include a hydraulic cement such as normal Portland cement, high early strength Portland cement, moderate-heat Portland cement, Portland blast furnace cement, silica cement, fly ash cement, alumina cement, ultra-high early strength Portland cement and the like.

From the viewpoint of securing strength, the content of the hydraulic substance (cement) is preferably 270 to 800 kg per 1 m$^3$ of concrete when the hydraulic composition is for concrete.

When the hydraulic composition is for mortar, the content is preferably 300 to 1,000 kg per 1 m$^3$ of mortar.

When the hydraulic composition is used for cement paste, the content is preferably 500 to 1,600 kg per 1 m$^3$ of cement paste.

Examples of water include tap water, sea water and the like. From the viewpoint of salt damage, tap water is preferable.

The water/cement ratio (W/C) in the hydraulic composition is preferably 30 to 75% by weight, and more preferably 45 to 65% by weight from the viewpoint of material separation.

The hydraulic composition may further comprise an aggregate depending on its use. Examples of the aggregate include a fine aggregate and a coarse aggregate.

As the fine aggregate, river sand, mountain sand, land sand, crushed sand and the like are preferable. The particle size (maximum particle size) of the fine aggregate is preferably 5 mm or less.

As the coarse aggregate, river gravel, mountain gravel, land gravel, crushed stone and the like are preferable. The particle size (maximum particle size) of the coarse aggregate is larger than the particle size of the fine aggregate, and is preferably 40 mm or less, and more preferably 25 mm or less.

In the case where the hydraulic composition is for concrete, the content of the fine aggregate is preferably 400 to 1,100 kg, and more preferably 500 to 1,000 kg per 1 m$^3$ of concrete. In the case where the hydraulic composition is for mortar, the content of the fine aggregate is preferably 500 to 2,000 kg, and more preferably 600 to 1,600 kg per 1 m$^3$ of mortar.

In the case where the hydraulic composition is for concrete, the content of the coarse aggregate is preferably 600 to 1,200 kg, and more preferably 650 to 1,150 kg per of 1 m$^3$ of concrete.

The fine aggregate ratio (volume percentage) in the aggregate is preferably 30 to 55% by volume, more preferably 35 to 55% by volume, and still more preferably 35 to 50% by volume from the viewpoint of maintaining fluidity or sufficient strength when the hydraulic composition is for concrete. Meanwhile, the fine aggregate ratio (% by volume) = volume of fine aggregate/(volume of fine aggregate + volume of coarse aggregate) × 100.

If necessary, an admixture can be added to the hydraulic composition in order to suppress heat generation during curing and improve durability after curing. Examples of the admixture include blast furnace slag, fly ash and the like.

If necessary, an AE agent (Air Entraining Agent) may be added in combination to the hydraulic composition for gaining a predetermined amount of air and rendering the hydraulic composition durable. Examples of the AE agent include those of types of an anionic surfactant, a cationic surfactant, a nonionic surfactant, an ampholytic surfactant, a rosin base surfactant and the like. Such addition is generally as a separate substance from the water-reducing composition.

Examples of the AE agent of the anionic surfactant type include those of types of carboxylic acid, sulfuric acid ester, sulfonic acid, phosphoric acid ester and the like.

Examples of the AE agent of the cationic surfactant type include those of types of an amine salt, a primary amine salt, a secondary amine salt, a tertiary amine salt, a quaternary amine salt and the like.

Examples of the AE agent of the nonionic surfactant type include those of types of ester, ester-ether, ether, alkanolamide and the like. Examples of the AE agent of the ampholytic surfactant type include those of types of amino acid, sulfo-betaine and the like.

Examples of the AE agent of the rosin base surfactant type include those of types of abietic acid, neoabietic acid, parastoric acid, pimaric acid, isopimaric acid, dehydroabietic acid and the like.

If necessary, in order to obtain the strength of the hydraulic composition, a defoamer may be added to the hydraulic composition, separately from that in the water-reducing composition. Examples of the defoamer include those described above for the water-reducing composition.

From the viewpoint of dispersibility, the amount of such defoamer added is preferably 1 to 50% by weight per the water-soluble cellulose ether.

Meanwhile, if necessary, a setting accelerator such as calcium chloride, lithium chloride and calcium formate as well as a setting retarder such as sodium citrate and sodium gluconate may be used in the hydraulic composition according to the present invention in order to control the physical properties of the hydraulic composition (fresh concrete, fresh mortar or fresh cement paste) immediately after mixing.

Further, if necessary, an expanding agent of hauyne or lime type may be added to the hydraulic composition according to the present invention in order to prevent cracking by shrinkage upon curing and drying, and cracking by temperature stresses associated with the heat of hydration reaction of cement.

The hydraulic composition described above can be produced by a conventional method. For example, first, the water-reducing composition according to the present invention, the hydraulic substance (cement), and if necessary, the aggregate (fine aggregate and coarse aggregate) and the defoamer are placed in a forced twin screw kneader mixer, and performing dry mixing. Thereafter, water is added thereto and kneading and mixing is performed to obtain the hydraulic composition.

As described above, a water-reducing composition at least containing a water-reducing agent having a solid component concentration of 10 to 25% by weight and an $Na^+$ ion concentration measured by ion chromatography of 8,500 ppm or higher, a water-soluble cellulose ether, a gum and a defoamer, which shows improved storage stability, a process for producing the same as well a hydraulic composition are provided.

EXAMPLES

Hereinafter, the present invention is described more specifically with reference to Examples and Comparative Example, but the invention is not limited to the Examples.

EXAMPLES 1 TO 12, COMPARATIVE EXAMPLE 1

Each of the water-reducing agent, the water-soluble cellulose ether, the gum and the defoamer shown below was weighed so as to give each amount to be added shown in Table 1, and these materials were subjected to stirring under stirring conditions shown in Table 1 (peripheral speed and rotation speed) by using the following high speed stirrer to produce each of water-reducing compositions.

Meanwhile, all of the stirring times were 1 minute after all materials of the water-reducing agent, the water-soluble cellulose ether, the gum, and the defoamer were charged. In addition, the gum was added in the state of powder.

Materials used

    (1) Water-reducing agent: a polycarboxylic acid base water-reducing agent (Chupol HP-11, manufactured by TAKEMOTO OIL & FAT Co., Ltd.) (Solid component concentration; 24.3%, $Na^+$ ion concentration; 16,000 ppm)

For some experiments as appropriate the water-reducing agent was diluted with pure water, so that the solid component concentration and the $Na^+$ ion concentration were adjusted as shown in Table 1 (that is, four levels as follows: 14.0% by weight and 9,200 ppm, 16.0% by weight and 10,500 ppm, 17.0% by weight and 11,200 ppm, and 20.0% by weight and 13,200 ppm) before use.

The $Na^+$ ion concentration in each water-reducing agent was measured by the following method.

The concentration of the sample of the water-reducing agent used for preparing the water-reducing composition was diluted to 1/10,000 with pure water. After filtration with a 0.2 $\mu$m filter (trade name, liquid chromatography disk (made of PTFE) manufactured by Thermo Fisher Scientific Inc.), the filtrate was measured under the following measuring conditions by using an ion chromatograph (DIONEX ICS-1600, manufactured by Thermo Fisher Scientific Inc.).

*Measuring conditions*

| | |
|---|---|
| Guard column: | CG14 (manufactured by Thermo Fisher Scientific Inc.) |
| Main column: | CS14 (manufactured by Thermo Fisher Scientific Inc.) |
| Suppressor: | CERS-500-4 mm (manufactured by Thermo Fisher Scientific Inc.) |
| Column temperature: | 30°C |
| Liquid volume: | 1 ml/min |
| Injection volume: | 25 $\mu$m |
| Eluent: | 10 mM MSA (methanesulfonic acid) |

The eluent was prepared by diluting 2 mol of methasulfonic acid to 10 mmol with pure water.

    (2) Water-soluble cellulose ether:

- Hydroxypropyl methyl cellulose (HPMC)
  (DS; 1.40, MS; 0.20,
  viscosity of 1% by weight aqueous solution at 20°C; 2,200 mPa·s)

- Hydroxyethyl methyl cellulose (HEMC)

(DS; 1.50, MS; 0.20,
viscosity of 1% by weight aqueous solution at 20°C; 2,100 mPa·s)

- Hydroxyethyl cellulose (HEC)
  (DS; 2.50, viscosity of 1% by weight aqueous solution at 20°C; 2,100 mPa·s)

(3) Gum:

- Diutan gum (DG) (KELCO-CRETE DG-F, manufactured by CP Kelco)
- Welan gum (WG) (KELCO-CRETE WG, manufactured by CP Kelco)
- Xanthan gum (XG) (KELTROL, manufactured by CP Kelco)

(4) Defoamer: Oxyalkylene base defoamer
(SN Defoamer 14-HP, manufactured by SAN NOPCO LIMITED)

High speed stirrer

(1) Homo Mixer (HM-310, manufactured by AS ONE Corporation)
(Type of stirring element: turbine-stator type,
size (diameter) of stirring element (rotation blade): 29 mm)

(2) Thin film slewing type high speed mixer (FILMIX manufactured by PRIMIX Corporation)
(Type of stirring element: Thin film slewing type (PC wheel type),
size (diameter) of stirring element (rotation blade): 52 mm)

Evaluation method

The sedimentation volume of each of the obtained water-reducing compositions was measured by the following method.

*Measurement of sedimentation volume*

Immediately after the above-described preparation, that is, immediately after preparing the water-reducing composition, or the time of dispersion, 100 ml of each water-reducing composition was collected in a plugged measuring cylinder (outer diameter of 32 mm, capacity of 100 ml, manufactured by IWAKI CO., LTD.). Each water-reducing composition was allowed to stand (left to stand) at room temperature (20 $\pm$ 3°C). The boundary with the supernatant was visually observed immediately after collection (after 0 hours), after 24 hours, after 72 hours and after 168 hours. Based on the scale corresponding to the boundary, the volume ratio (suspension maintenance ratio) of the suspended layer (water-reducing composition layer) to the whole liquid was obtained as the sedimentation volume. For example, when the boundary with the supernatant is 0 mL (or at 100mL), the sedimentation volume is 100% by weight, when the boundary with the supernatant is 90 mL, the sedimentation volume is 90% by weight, and when the boundary with the supernatant is 50 mL, the sedimentation volume is 50% by weight.

The results are shown in Table 1.

It can be seen that when preparing a water-reducing composition containing a water-reducing agent having a solid component concentration of 10.0 to 25.0% by weight and having an Na$^+$ ion concentration of 8,500 ppm or higher, a water-soluble cellulose ether, a gum and a defoamer, by setting a peripheral speed of a high speed stirrer to 8.50 m/s or higher, it was found that the storage stability of the water-reducing composition is improved.

Table 1

| | | | 1 | 2 | 3 | 4 | 5 | 6 | 7 | 8 | 9 | 10 | 11 | 12 | Comp. Ex. 1 |
|---|---|---|---|---|---|---|---|---|---|---|---|---|---|---|---|---|
| | | | Example | | | | | | | | | | | | |
| Water-reducing agent | Type | | PC base | PC base | PC base | PC base | PC base | PC Base | PC base | PC base | PC base | PC base | PC base | PC base | PC base |
| | Solid component concentration (% by weight) | | 16.0 | 16.0 | 16.0 | 16.0 | 14.0 | 17.0 | 20.0 | 16.0 | 16.0 | 16.0 | 16.0 | 16.0 | 16.0 |
| | Na+ concentration (ppm) | | 10,500 | 10,500 | 10,500 | 10,500 | 9,200 | 11,200 | 13,200 | 10,500 | 10,500 | 10,500 | 10,500 | 10,500 | 10,500 |
| | Amount added | (ml) | 200 | 200 | 200 | 200 | 200 | 200 | 200 | 200 | 200 | 200 | 200 | 200 | 200 |
| | | (g) | 212.2 | 212.2 | 212.2 | 212.2 | 210.6 | 213.0 | 215.2 | 212.2 | 212.2 | 212.2 | 212.2 | 212.2 | 212.2 |
| Water-soluble cellulose ether | Type | | HPMC | HPMC | HPMC | HPMC | HPMC | HPMC | HPMC | HEMC | HEC | HPMC | HPMC | HPMC | HPMC |
| | Amount added | (g) | 2.0 | 2.0 | 2.0 | 2.0 | 2.0 | 2.0 | 2.0 | 2.0 | 2.0 | 2.0 | 2.0 | 2.0 | 2.0 |
| Gum | Type | | DG | DG | DG | DG | DG | DG | DG | DG | DG | WG | XG | DG | DG |
| | Amount added | (g) | 0.40 | 0.40 | 0.40 | 0.40 | 0.40 | 0.40 | 0.40 | 0.40 | 0.40 | 0.45 | 0.50 | 0.40 | 0.40 |
| Defoamer | Type | | OA base | OA base | OA base | OA base | OA base | OA base | OA base | OA base | OA base | OA base | OA base | OA base | OA base |
| | Amount added | (g) | 0.6 | 0.6 | 0.6 | 0.6 | 0.6 | 0.6 | 0.6 | 0.6 | 0.6 | 0.6 | 0.6 | 0.6 | 0.6 |
| Stirrer | Type | | Homo Mixer | Homo Mixer | Homo Mixer | Homo Mixer | Homo Mixer | Homo Mixer | Homo Mixer | Homo Mixer | Homo Mixer | Homo Mixer | Homo Mixer | Thin film slewing type | Homo Mixer |
| | Peripheral speed of stirring element (m/s) | | 8.65 | 9.11 | 15.18 | 22.78 | 9.11 | 9.11 | 22.78 | 9.87 | 9.87 | 9.87 | 9.87 | 10.60 | 8.35 |
| | Rotation speed of stirring element (rpm) | | 5,700 | 6,000 | 10,000 | 15,000 | 6,000 | 6,000 | 15,000 | 6,500 | 6,500 | 6,500 | 6,500 | 3,900 | 5,500 |

EP 3 560 903 A1

11

| | | Example | | | | | | | | | | | | Comp. Ex. |
|---|---|---|---|---|---|---|---|---|---|---|---|---|---|---|
| | | 1 | 2 | 3 | 4 | 5 | 6 | 7 | 8 | 9 | 10 | 11 | 12 | 1 |
| Sedimentation volume (% by volume) | After 0 hours | 100 | 100 | 100 | 100 | 100 | 100 | 100 | 100 | 100 | 100 | 100 | 100 | 100 |
| | After 24 hours | 95 | 100 | 100 | 100 | 100 | 100 | 100 | 100 | 100 | 100 | 100 | 100 | 75 |
| | After 72 hours | 80 | 85 | 95 | 100 | 95 | 83 | 90 | 85 | 83 | 86 | 84 | 95 | 45 |
| | After 168 hours | 65 | 70 | 80 | 95 | 85 | 65 | 80 | 65 | 55 | 65 | 60 | 90 | 20 |
| PC base: Polycarboxylic acid base, HPMC: Hydroxypropyl methyl cellulose, HEMC: Hydroxyethyl methyl cellulose, HEC: Hydroxyethyl cellulose, DG: Diutan gum, WG: Welan gum, XG: Xanthan gum, OA base: Oxyalkylene base | | | | | | | | | | | | | | |

Notes

In respect of numerical ranges disclosed in the present description it will of course be understood that in the normal way the technical criterion for the upper limit is different from the technical criterion for the lower limit, i.e. the upper and lower limits are intrinsically distinct proposals.

For the avoidance of doubt it is confirmed that in the general description above, in the usual way the proposal of general preferences and options in respect of different features of the method and composition constitutes the proposal of general combinations of those general preferences and options for the different features, insofar as they are combinable and compatible and are put forward in the same context.

The entire contents of Japanese Patent Applications Nos. 2018-083876 and 2019-053248 filed in Japan on April 25, 2018 and March 20, 2019, the priority of which is claimed herein, are hereby incorporated by reference as a precaution in case of error in translation or transcription.

Although the present invention has been described above with reference to embodiments, the present invention is not limited to the embodiments. Variations such as other embodiments, additions, modifications and deletions may be made thereto within a range that can be conceived by those skilled in the art, and all embodiments are included in the scope of the present invention as long as the functional effects of the present invention are exhibited.

**Claims**

1.   A method for preparing a water-reducing composition comprising a step of stirring water-reducing agent, water-soluble cellulose ether, gum and defoamer using a high speed stirrer,
     wherein the water-reducing agent has a solid component concentration of 10 to 25% by weight and an $Na^+$ ion concentration of 8,500 ppm or higher, and a stirring element in the high speed stirrer has a peripheral speed of 8.50 m/s or higher in the stirring step.

2.   A method of claim 1 wherein the water-reducing agent is polycarboxylic acid-based water-reducing agent, lignin-based water-reducing agent or melamine-based water-reducing agent.

3.   A method of claim 2 wherein the water-reducing agent is polycarboxylic acid base water-reducing agent.

4.   A method of any one of the preceding claims wherein the high speed stirrer is a rotor-stator type mixer or a cylindrical wall mixer.

5.   A method of any one of the preceding claims wherein the stirring element has a diameter of 10 to 500 mm.

6.   A method of any one of the preceding claims wherein the rotation speed of the stirring element in the high speed stirrer is 1,200 to 50,000 rpm.

7.   A method of any one of the preceding claims wherein the solid component concentration of the water-reducing agent is 12 to 22.5% by weight.

8.   A method of any one of the preceding claims wherein the defoamer is selected from oxyalkylene-based defoamers.

9.   A method of any one of the preceding claims wherein the amount of defoamer is 0.002 to 10 parts by weight per 100 parts by weight of the water-reducing agent.

10.  A method of any one of the preceding claims wherein the amount of the water-soluble cellulose ether is 0.1 to 5.0 parts by weight per 100 parts by weight of the water-reducing agent.

11.  A method of any one of the preceding claims wherein
     the gum is selected from diutan gum, welan gum, xanthan gum and gellan gum;
     the amount of gum in the case of diutan gum is 0.005 to 2 parts by weight per 100 parts by weight of the water-reducing agent;
     the amount of gum in the case of welan gum, xanthan gum or gellan gum is 0.01 to 20 parts by weight per 100 parts by weight of the water-reducing agent.

12.  A water-reducing composition comprising or consisting of water-reducing agent, water-soluble cellulose ether, gum and defoamer,

wherein the water-reducing agent component has a solid component concentration of 10 to 25% by weight and an Na+ ion concentration of 8,500 ppm or higher, and

the water-reducing composition has a sedimentation volume, after being left standing for 72 hours from immediately after preparing the water-reducing composition, of 80% by volume or higher;

the water-reducing agent, water-soluble cellulose ether, gum and defoamer, optionally being as defined in any of claims 2, 3 and 8-11.

13. A hydraulic composition comprising a water-reducing composition of claim 12, a hydraulic substance and water.

14. A method of preparing a hydraulic composition comprising combining a water-reducing composition of claim 12 or 13, or a water-reducing composition obtained or obtainable by a method of any one of claims 1 to 11, with a hydraulic substance and water.

15. A method of claim 14 wherein

when the hydraulic composition is for concrete, the content of the water-reducing composition therein is 0.10 to 2.0% by weight;

when the hydraulic composition is for mortar, the content of the water-reducing composition therein is 0.05 to 1.5% by weight, and

when the hydraulic composition is for cement paste, the content of the water-reducing composition therein is 0.02 to 1.0% by weight.

Europäisches
Patentamt

European
Patent Office

Office européen
des brevets

## EUROPEAN SEARCH REPORT

Application Number

EP 19 17 1164

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | EP 2 966 049 A1 (SHINETSU CHEMICAL CO [JP]) 13 January 2016 (2016-01-13)<br>* paragraphs [0017] - [0039] *<br>* paragraphs [0049] - [0063] *<br>----- | 1-15 | INV.<br>C04B28/02<br>C04B40/00<br><br>ADD.<br>C04B103/30 |
| X | JP H09 268046 A (SHINETSU CHEMICAL CO) 14 October 1997 (1997-10-14)<br>* paragraphs [0001], [0005] - [0020] *<br>----- | 13 | |
| X | JP 2013 014480 A (DENKI KAGAKU KOGYO KK; WR GRACE & CO CONNECTICUT) 24 January 2013 (2013-01-24)<br>* paragraphs [0001], [0014] - [0030] *<br>----- | 13 | |

TECHNICAL FIELDS
SEARCHED     (IPC)

C04B

The present search report has been drawn up for all claims

| Place of search | Date of completion of the search | Examiner |
|---|---|---|
| Munich | 13 August 2019 | Gattinger, Irene |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 19 17 1164

This annex lists the patent family members relating to the patent documents cited in the above-mentioned European search report.
The members are as contained in the European Patent Office EDP file on
The European Patent Office is in no way liable for these particulars which are merely given for the purpose of information.

13-08-2019

| Patent document cited in search report | | Publication date | Patent family member(s) | Publication date |
|---|---|---|---|---|
| EP 2966049 | A1 | 13-01-2016 | CN 105314921 A | 10-02-2016 |
| | | | EP 2966049 A1 | 13-01-2016 |
| | | | JP 6428500 B2 | 28-11-2018 |
| | | | JP 2016056081 A | 21-04-2016 |
| | | | KR 20160007383 A | 20-01-2016 |
| | | | TW 201619268 A | 01-06-2016 |
| | | | US 2016009599 A1 | 14-01-2016 |
| JP H09268046 | A | 14-10-1997 | NONE | |
| JP 2013014480 | A | 24-01-2013 | JP 5808594 B2 | 10-11-2015 |
| | | | JP 2013014480 A | 24-01-2013 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016056081 A
- EP 2966049 A
- JP 2018083876 A
- JP 2019053248 A

**Non-patent literature cited in the description**

- Japanese Pharmacopoeia